# FASCICULE DE BREVET EUROPEEN

(11) **EP 3 104 501 B1**
(45) Date de publication et mention de la délivrance du brevet: **20.12.2017**
(21) Numéro de dépôt: 16168275.2
(22) Date de dépôt: 04.05.2016
(51) Int. Cl.: H02K 1/24

(54) **ROTOR POUR MACHINE ELECTRIQUE TOURNANTE**
ROTOR FÜR ELEKTRISCH UMLAUFENDE MASCHINE
ROTOR FOR ROTARY ELECTRIC MACHINE

(30) Priorité: 08.06.2015 FR 1555190
(43) Date de publication de la demande: 14.12.2016
(73) Titulaire: VALEO EQUIPEMENTS ELECTRIQUES MOTEUR, 94046 Créteil Cedex (FR)
(72) Inventeur: GAUTRU, Jean-François, 94046 CRETEIL CEDEX (FR); FAVEROLLE, Pierre, 94046 CRETEIL CEDEX (FR)

(56) Documents cités:
- EP-A2- 0 651 494
- US-A- 5 786 652
- US-A- 5 903 083
- US-B1- 6 555 944

## Description

L'invention concerne un rotor pour une machine électrique tournante.

L'invention trouve une application particulièrement avantageuse dans le domaine des machines électriques tournantes telles que les alternateurs ou encore les alterno-démarreurs. On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Une machine électrique tournante comprend un rotor mobile en rotation et présentant un diamètre extérieur usiné constant. Cette machine électrique tournante comprend, en outre, un stator fixe entourant le rotor. Le rotor et le stator sont séparés l'un de l'autre par un entrefer de largeur constante. Lorsque le rotor est en rotation, il induit un champ magnétique au stator qui le transforme en courant électrique afin d'alimenter l'électronique du véhicule et de recharger la batterie.

Par ailleurs, les véhicules automobiles ont une consommation d'énergie électrique de plus en plus importante, on demande donc aux machines électriques tournantes d'être de plus en plus performantes afin de fournir l'énergie électrique nécessaire. Une solution pour améliorer les performances d'une machine électrique tournante est d'augmenter la vitesse de rotation du rotor. En effet, cela permet d'accroître le débit de la machine électrique tournante.

Cependant, augmenter la vitesse de rotation amplifie l'effet de centrifugation correspondant à la déformation mécanique de griffes du rotor. A cause de la centrifugation, les griffes du rotor pourraient alors venir frotter sur le diamètre interne du stator et ainsi détruire la machine électrique tournante ou du moins l'endommager.

Afin d'éviter les risques de frottement entre le rotor et le stator, la largeur de l'entrefer doit alors être augmentée. Cependant, augmenter cette largeur revient à éloigner le rotor du stator ce qui entraîne une diminution des performances de la machine électrique tournante.

Les documents EP 0651494 et US 6555944 décrivent chacun un rotor à griffe présentant une structure de maintien des griffes en forme d'anneau et disposée sur l'extrémité libre desdites griffes.

La présente invention vise à permettre d'éviter les inconvénients de l'art antérieur.

Ainsi, la présente invention vise à permettre de réaliser une machine électrique tournante dont les performances électromagnétiques sont améliorées tout en garantissant une bonne tenue de ladite machine électrique tournante à la centrifugation.

La présente invention a donc pour objet un rotor pour machine électrique tournante. Selon la présente invention, le rotor est monté rotatif autour d'un axe et comporte une paire de roues polaires présentant, chacune, un flasque et une pluralité de pôles magnétiques, chaque pôle magnétique s'étendant axialement à partie du flasque vers une extrémité libre et présentant une surface externe, ladite surface externe d'au moins un pôle magnétique d'au moins une roue polaire présentant au moins un segment décroissant, ledit segment décroissant étant configuré de manière à ce qu'un rayon entre ladite surface externe et l'axe du rotor décroisse de manière sensiblement linéaire lorsque l'on se déplace, le long dudit segment décroissant, vers l'extrémité libre dudit pôle magnétique.

Le segment décroissant est, en outre, défini comme un segment appartenant à un plan de coupe comprenant l'axe de rotation du rotor et s'étendant, sur la surface externe axiale d'un pôle magnétique, entre une première extrémité et une seconde extrémité de manière à ce que la distance entre l'axe de rotation et la première extrémité du segment soit supérieure à la distance entre l'axe de rotation et la seconde extrémité du segment qui est plus proche de l'extrémité libre dudit pôle magnétique que la première extrémité. En d'autres termes, la surface externe de pôle magnétique ne s'étend pas parallèlement à l'axe du rotor mais vers l'axe du rotor lorsque l'on se dirige vers l'extrémité libre du pôle magnétique.

Ainsi, le diamètre externe du rotor, au niveau dudit pôle magnétique, n'est pas constant le long de l'axe du rotor.

Une largeur radiale d'un entrefer, défini comme un espace entre la surface externe du rotor et une surface interne d'un stator associé audit rotor, n'est donc pas constante. En outre, cela permet également que l'entrefer présente une largeur, dans une direction radiale, qui augmente lorsque l'on se déplace, axialement, vers l'extrémité libre dudit pôle magnétique.

Le fait que la largeur de l'entrefer augmente lorsque l'on se déplace vers l'extrémité libre du pôle magnétique, permet d'obtenir une largeur d'entrefer qui soit à la fois :
- relativement faible au niveau de la portion du pôle magnétique où le passage du flux magnétique du rotor vers le stator est le plus important, c'est-à-dire pour la portion du pôle magnétique proche du flasque et
- relativement grande au niveau de l'extrémité libre du pôle magnétique qui est la zone la plus sensible à la tenue en centrifugation mécanique lors de la rotation du rotor.

En effet, en agissant notamment sur la partie du pôle magnétique du rotor comprenant l'extrémité libre, les contraintes mécaniques sur la centrifugation globale du pôle magnétiques sont réduites. Cela permet donc de diminuer la valeur minimale de largeur d'entrefer tout en gardant une largeur d'entrefer, au niveau de l'extrémité libre du pôle magnétique, acceptable pour éviter tout contact entre le rotor et le stator, lorsque le rotor est en rotation.

Un rotor présentant une telle surface externe est donc adapté de manière à permettre à la fois la tenue en centrifugation et une augmentation du courant électrique produit par la machine électrique tournante correspondante, à une vitesse donnée. Par ailleurs, un rotor présentant une telle surface externe est également adapté pour permettre, pour une largeur d'entrefer donnée, l'augmentation de la vitesse de rotation du rotor ce qui permet ainsi d'augmenter le courant électrique produit par la machine électrique tournante.

Avantageusement, le rayon décroît, le long du segment décroissant, de manière sensiblement linéaire. Cela permet d'améliorer la tenue en centrifugation du rotor ainsi que de simplifier la fabrication du rotor.

De manière avantageuse, le rayon décroît, le long du segment décroissant, suivant un angle inférieur ou égal à 20° par rapport à l'axe du rotor. Cette valeur d'angle permet un équilibrage entre l'amélioration du débit de courant électrique du rotor et sa bonne tenue en centrifugation.

De plus, le segment décroissant présente avantageusement une longueur, dans une direction axiale, comprise entre 0,2 et 1 fois la longueur de la surface externe du pôle magnétique correspondant.

Avantageusement, le segment décroissant présente deux extrémités dont une de ces extrémités est confondues avec l'extrémité libre du pôle magnétique.

Dans un exemple avantageux de réalisation de l'invention, la surface externe présente, en outre, un segment chanfreiné s'étendant à partir d'une extrémité axiale externe du flasque. Le segment chanfreiné s'étend dans un plan de coupe comprenant l'axe de rotation du rotor, sur la surface externe axiale d'un pôle magnétique, entre une première extrémité et une seconde extrémité de manière à ce que la distance entre l'axe de rotation et la première extrémité du segment chanfreiné soit inférieure à la distance entre l'axe de rotation et la seconde extrémité du segment chanfreiné qui est plus proche de l'extrémité libre dudit pôle magnétique que la première extrémité. Ce segment chanfreiné permet d'améliorer l'équilibrage du rotor.

Dans un autre exemple avantageux de mise en oeuvre de l'invention, la surface externe présente, en outre, au moins un segment constant configuré de manière à ce que le rayon entre ladite surface externe et l'axe du rotor soit constant, le long dudit segment constant. Le segment constant s'étend dans un plan de coupe comprenant l'axe de rotation du rotor, sur la surface externe axiale d'un pôle magnétique, entre une première extrémité et une seconde extrémité de manière à ce que la distance entre l'axe de rotation et la première extrémité du segment constant soit égale à la distance entre l'axe de rotation et la seconde extrémité du segment constant qui est plus proche de l'extrémité libre dudit pôle magnétique que la première extrémité. Cela permet d'avoir une zone où la surface externe du rotor s'étend parallèlement à l'axe du rotor, c'est-à-dire où la distance entre l'axe de rotation et un point du segment constant est la même quelque soit le point pris sur ledit segment constant. Ce segment constant permet d'éviter toute zone d'étranglement du flux magnétique.

Avantageusement, le segment constant s'étend axialement entre une surface axiale externe du flasque et le segment décroissant. Le cas échéant, le segment constant est plus proche du flasque que de l'extrémité libre du pôle magnétique correspondant. Cela permet que cette zone où la distance entre la surface externe du pôle magnétique et l'axe de rotation est identique, se trouve dans une zone où ladite surface externe est proche du stator et donc une zone où l'entrefer est faible. Le débit de courant de la machine électrique tournante est donc augmenté.

Dans un exemple avantageux de réalisation, le segment constant est adjacent au segment chanfreiné et au segment décroissant. Cela permet que cette zone où la distance entre la surface externe du pôle magnétique et l'axe de rotation est identique, se trouve dans une zone où ladite surface externe est la plus proche du stator et donc une zone où l'entrefer est minimal. Le débit de courant de la machine électrique tournante est donc augmenté.

En outre, le segment constant présente, de manière avantageuse, une longueur, dans une direction axiale, comprise entre 0,3 et 0,8 fois la longueur de la surface externe du pôle magnétique correspondant. Cette longueur de segment constant permet un équilibrage entre l'augmentation du courant électrique produit et la bonne tenue en centrifugation du rotor.

Dans un exemple avantageux de réalisation, chaque pôle magnétique d'une seule des roues polaires présente une surface externe comprenant, respectivement, au moins un segment décroissant. Le fait que tous les pôles magnétiques d'une même roue polaire présentent la même forme permet de simplifier la fabrication de la roue polaire et donc du rotor.

Dans un autre exemple avantageux de réalisation, chaque pôle magnétique des deux roues polaires présente une surface externe comprenant, respectivement, au moins un segment décroissant. Cela permet d'avoir un rayon de la surface externe constant dans un plan radial, sur toute la circonférence du rotor, et donc d'améliorer les performances de ce rotor ainsi que sa tenue en centrifugation. De même, cela permet d'avoir un entrefer de la machine électrique tournante associée constant dans un plan radial, sur toute la circonférence de ladite machine, et donc d'améliorer ses performances ainsi que sa tenue en centrifugation.

Avantageusement, chaque pôle magnétique est en forme de griffe.

Enfin, la présente invention concerne une machine électrique tournante comportant un rotor tel que précédemment décrit. Ainsi, la largeur de l'entrefer de la machine électrique tournante est adaptée de manière à permettre à la fois la tenue en centrifugation et l'amélioration des performances électromagnétiques de la machine électrique tournante correspondante, à une vitesse donnée. Dans une autre configuration, la largeur de l'entrefer de la machine électrique tournante est également adaptée pour permettre, pour une tenue en centrifugation donnée et pour une largeur d'entrefer donnée, l'augmentation de la vitesse de rotation du rotor ce qui permet ainsi d'améliorer les performances de la machine électrique tournante.

En outre, une machine électrique tournante telle que précédemment décrite peut avantageusement former un alternateur ou un alterno-démarreur.

L'invention pourra être mieux comprise à la lecture de la description détaillée qui va suivre, d'exemples de mise en oeuvre non limitatifs de l'invention et à l'examen des dessins annexés, sur lesquels :
- la figure 1 représente, schématiquement et partiellement, une vue en coupe d'une machine électrique tournante selon un exemple de mise en oeuvre de l'invention,
- la figure 2 représente, schématiquement et partiellement, une vue en coupe d'un rotor et un stator de la figure 1,
- la figure 3 représente, schématiquement et partiellement, une vue en coupe d'une partie d'un rotor et d'un stator selon un autre exemple de réalisation.

Les éléments identiques, similaires ou analogues conservent les mêmes références d'une figure à l'autre.

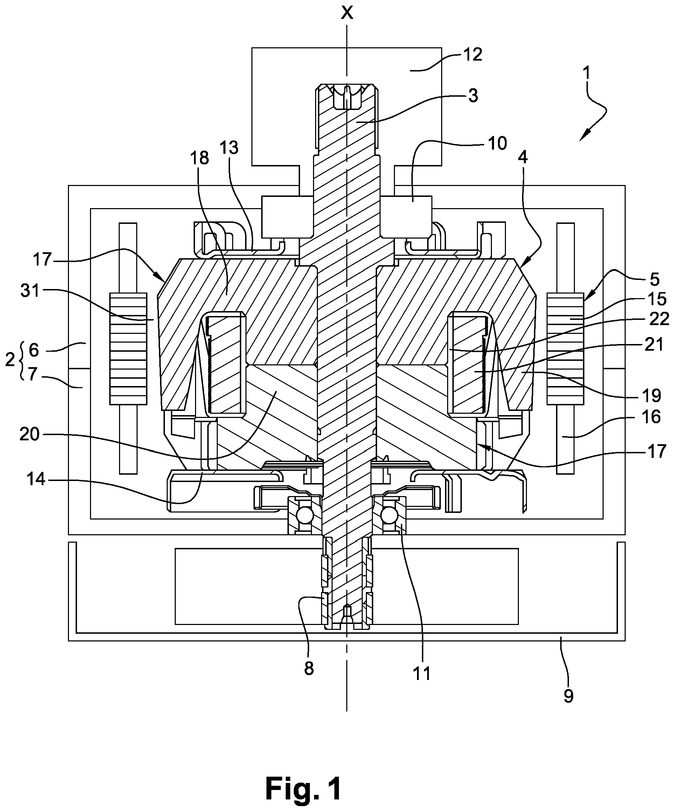

La figure 1 représente une machine électrique tournante 1 compacte et polyphasée, notamment pour véhicule automobile. Cette machine électrique tournante 1 transforme de l'énergie mécanique en énergie électrique, en mode alternateur, et peut fonctionner en mode démarreur pour transformer de l'énergie électrique en énergie mécanique.

La machine électrique tournante 1 comporte un carter 2. A l'intérieur de ce carter 2, elle comporte, en outre, un arbre 3, un rotor 4 solidaire en rotation de l'arbre 3 et un stator 5 entourant le rotor 4. Le mouvement de rotation du rotor 4 se fait autour d'un axe X. Dans la suite de la description les orientations radiale, transversale et axiale sont à considérer par rapport à cet axe X.

Dans cet exemple, le carter 2 comporte un palier avant 6 et un palier arrière 7 qui sont assemblés ensemble. Ces paliers 6, 7 sont de forme creuse et portent, chacun, centralement un roulement à billes 10, 11 respectif pour le montage à rotation de l'arbre 3.

Une poulie 12 est fixée sur une extrémité avant de l'arbre 3, au niveau du palier avant 6, par exemple à l'aide d'un écrou en appui sur le fond de la cavité de cette poulie. Cette poulie 12 permet de transmettre le mouvement de rotation à l'arbre 3.

L'extrémité arrière de l'arbre 3 porte, ici, des bagues collectrices appartenant à un collecteur et reliées par des liaisons filaires au bobinage. Des balais appartenant à un porte-balais 8 sont disposés de façon à frotter sur les bagues collectrices. Le porte-balais 8 est relié à un régulateur de tension compris dans un pont redresseur 9.

Le palier avant 6 et le palier arrière 7 peuvent comporter, en outre, des ouvertures sensiblement latérales pour le passage de l'air en vue de permettre le refroidissement de la machine électrique tournante par circulation d'air engendrée par la rotation d'un ventilateur avant 13 sur la face dorsale avant du rotor 4, c'est-à-dire au niveau du palier avant 6 et d'un ventilateur arrière 14 sur la face dorsale arrière du rotor, c'est-à-dire au niveau du palier arrière 7.

Dans cet exemple de réalisation, le stator 5 comporte un corps 15 en forme d'un paquet de tôles doté d'encoches, par exemple du type semi fermée ou ouverte, équipées d'isolant d'encoches pour le montage des phases du stator. Chaque phase comporte au moins un enroulement 16 traversant les encoches du corps 15 et formant, avec toutes les phases, un chignon avant et un chignon arrière de part et d'autre du corps du stator. Les enroulements 16 sont obtenus, par exemple, à partir d'un fil continu recouvert d'émail ou à partir d'éléments conducteurs en forme de barre tels que des épingles reliées entre elles. Ces enroulements 16 sont par exemple des enroulements triphasés connectés en étoile ou en triangle, dont les sorties sont reliées au pont redresseur 9.

Le rotor 4 de la figure 1 est un rotor à griffe. Il comporte deux roues polaires 17. Chaque roue polaire 17 est formée d'un flasque 18 et d'une pluralité de pôles magnétiques 19. Le rotor 4 comporte, en outre, un noyau 20 cylindrique qui est intercalé axialement entre les roues polaires 17. Ici, ce noyau 17 est formé de deux demi noyaux appartenant chacun à l'une des roues polaires 17.

Le rotor 4 comporte, entre le noyau 20 et les pôles magnétiques 19, une bobine 21 comportant, ici, un moyeu de bobinage et un bobinage électrique sur ce moyeu. La bobine 21 peut être bobinée sur un isolant de bobine 22.

Le rotor 4 peut également comporter des aimants permanents (non représentés) interposés entre deux pôles magnétiques 19 voisins à la périphérie externe du rotor. En variante, le rotor 4 peut être dépourvu de tels aimants permanents.

Lorsque le bobinage électrique est alimenté électriquement à partir des balais, le rotor 4 est magnétisé et devient un rotor inducteur avec formation de pôles magnétiques Nord-Sud au niveau des pôles magnétiques 19. Ce rotor inducteur crée un courant induit alternatif dans le stator induit lorsque l'arbre 3 est en rotation. Le pont redresseur 9 transforme alors ce courant induit alternatif en un courant continu, notamment pour alimenter les charges et les consommateurs du réseau de bord du véhicule automobile ainsi que pour recharger sa batterie.

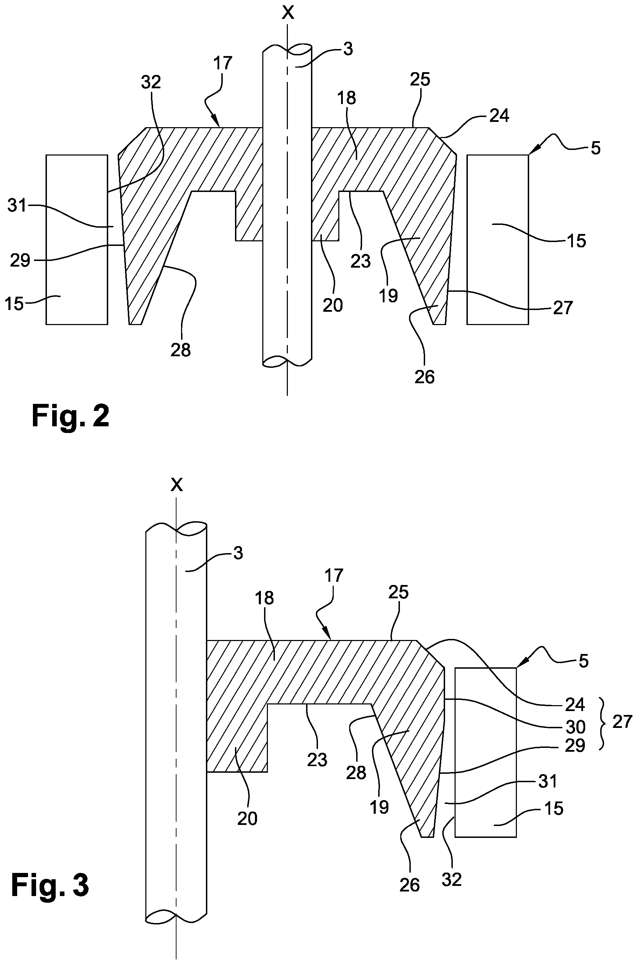

La figure 2 illustre plus précisément une des roues polaires 17 du rotor 4 de la figure 1. La roue polaire 17 présente un flasque 18 d'orientation transversale. Le flasque 18 présente, ici, une forme annulaire délimitée par une surface axiale externe 25 s'étendant sensiblement perpendiculairement à l'axe X et une surface axiale interne 23 s'étendant sensiblement perpendiculairement à l'axe X.

La roue polaire 17 présente, en outre, une pluralité de pôles magnétiques 19. Les pôles magnétiques 19 sont, chacun, de forme préférentiellement trapézoïdale et notamment en forme de griffe. Chacun des pôles magnétiques 19 s'étend dans une direction sensiblement axiale à partir du flasque 18 jusqu'à une extrémité libre 26 du pôle magnétique 19 correspondant.

Les pôles magnétiques 19 d'une roue polaire sont, respectivement, dirigés axialement vers le flasque 18 de l'autre roue polaire, chaque pôle magnétique 19 pénétrant dans l'espace existant entre deux pôles magnétiques voisins de ladite autre roue polaire, de sorte que les pôles magnétiques 19 des deux roues polaires 17 soient imbriqués.

Chaque pôle magnétique 19 présente respectivement une surface externe 27 en regard du stator 5 et une surface interne 28 opposée radialement à ladite surface externe 27. La surface externe 27 et la surface interne 28 s'étendent sensiblement axialement, respectivement. La surface externe 27 de chacun des pôles magnétiques 19 s'étend sensiblement axialement entre la surface axiale externe 25 du flasque 18 et l'extrémité libre 26.

La surface externe 27 du pôle magnétique 19 de la roue polaire 17 présente un segment décroissant 29 configuré de manière à ce qu'un rayon entre la surface externe 27 et l'axe X du rotor 4 décroisse, lorsque l'on se déplace, le long du segment décroissant 29, vers l'extrémité libre 26 du pôle magnétique 19 correspondant.

Par exemple, la distance entre l'axe X et la surface externe 27 au niveau de l'extrémité libre 26 est inférieure à la distance entre l'axe X et la surface externe 27 au niveau d'une extrémité du segment décroissant 29 opposée, axialement, à l'extrémité libre 26. Dans ce cas, une extrémité du segment décroissant 29 est confondue avec l'extrémité libre 26.

Dans l'exemple de réalisation de la figure 2, la surface interne 28 présente, elle, un segment configuré de manière à ce qu'un rayon entre la surface interne 28 et l'axe X du rotor 4 croisse, lorsque l'on se déplace, le long du segment, vers l'extrémité libre 26 du pôle magnétique 19 correspondant. Dans une variante de réalisation, ce segment pourrait être configuré de manière à ce qu'un rayon entre la surface interne 28 et l'axe X du rotor 4 soit constant, lorsque l'on se déplace, le long du segment, vers l'extrémité libre 26 du pôle magnétique 19 correspondant.

Dans les deux configurations décrites ci-dessus, l'extrémité libre 26 du pôle magnétique 19 est la partie dudit pôle magnétique qui présente une largeur radiale minimale. En outre, la surface externe 27 est plus proche de l'axe X à l'extrémité libre 26 qu'au niveau de la partie du pôle magnétique 19 proche du flasque 18 et, ainsi, plus éloignée du stator 5.

Dans l'exemple illustré ici, le rayon de la surface externe 27 décroît, le long du segment décroissant 29, de manière sensiblement linéaire. En variante, ce rayon pourrait décroître en formant des paliers, par exemple en forme d'escalier. Dans une autre variante de réalisation, ce rayon pourrait également décroître en suivant une forme de courbe, par exemple en ellipse.

De préférence, le rayon de la surface externe 27 décroît, le long du segment décroissant 29, suivant un angle inférieur ou égal à 20° par rapport à l'axe X. Toujours de préférence, cet angle est supérieur à 0,1°.

De plus, le segment décroissant 29 présente préférentiellement une longueur, dans une direction axiale, comprise entre 0,2 et 1 fois la longueur axiale de la surface externe 27 du pôle magnétique 19 correspondant.

Dans cet exemple, la surface externe 27 comprend, en outre, un segment chanfreiné 24 s'étendant à partir de la surface axiale externe 25 du flasque 18. Dans l'exemple de la figure 2, le segment décroissant 29 s'étend sur la longueur de la surface externe 27 entre le segment chanfreiné 24 et l'extrémité libre 26.

La figure 3 illustre un autre mode de réalisation de la roue polaire 17 du rotor 4. Dans ce mode de réalisation, la surface externe 27 présente, en outre, un segment constant 30 configuré de manière à ce que le rayon entre la surface externe 27 et l'axe X du rotor 4 soit constant, le long du segment constant 30. De préférence, le segment constant 30 s'étend axialement entre la surface axiale externe 25 du flasque 18 et le segment décroissant 29. En particulier, dans l'exemple représenté ici, le segment constant 30 est adjacent au segment chanfreiné 24 et au segment décroissant 29.

De préférence, le segment constant présente une longueur, dans une direction axiale, comprise entre 0,3 et 0,8 fois la longueur de la surface externe 27 du pôle magnétique 19 correspondant. En choisissant un tel ratio, on dimensionne, pour chaque pôle magnétique 19, le segment constant 30 en fonction du flux total transféré, par le pôle magnétique, du rotor 4 vers le stator 5 puisque la longueur du pôle magnétique 19 est dimensionnée pour transférer ce flux. En outre, ce ratio est choisit en tenant compte de la reluctance du circuit magnétique du pôle magnétique.

Ainsi, dans l'exemple de la figure 3, la surface externe 27 du pôle magnétique 19 comprend un segment chanfreiné 24, un segment constant 30 et un segment décroissant 29. En variante, la surface externe 27 pourrait comprendre plusieurs segments constants 30 et/ou plusieurs segments décroissants 29, disposés de manière alternée les uns des autres dans la longueur de la surface externe 27.

Dans un mode de réalisation, chaque pôle magnétique 19 de la roue polaire 17 présente une surface externe 27 telle que précédemment décrite. En outre, dans un autre mode de réalisation, chaque pôle magnétique 19 des deux roues polaires 17 du rotor 4 présente une surface externe 27 telle que précédemment décrite.

Une telle surface externe 27 d'un rotor 4 peut être formée directement lors du procédé de fabrication de la roue polaire 17. Dans une variante de réalisation, cette forme de surface externe 27 peut être usinée une fois le rotor 4 formé. Dans les deux cas, la surface externe 27 est formée avant le paquetage du rotor 4.

La présente invention concerne, en outre, une machine électrique tournante 1, telle qu'un alternateur ou un alterno-démarreur, comprenant un rotor 4 tel que précédemment décrit.

Le fait que la surface externe 27 du pôle magnétique 19 présente un segment décroissant 29 permet à la machine électrique tournante 1 d'avoir un entrefer 31 qui présente une largeur, dans une direction radiale, qui augmente lorsque l'on se déplace, axialement, vers l'extrémité libre 26 dudit pôle magnétique 19. Un entrefer 31 est défini comme un espace entre une surface interne 32 du stator 5, correspondant à la périphérie axiale interne dudit stator 5, et la surface externe 27 d'un des pôles magnétiques 19. La surface interne 32 et la surface externe 27 s'étendent axialement et sont en regard l'une de l'autre.

Ainsi, la largeur de l'entrefer 31 varie. En particulier, la largeur de l'entrefer 31 au niveau de l'extrémité libre 26 est plus grande que la largeur de l'entrefer 31 au niveau de la zone du pôle magnétique 19 proche du flasque 18. L'entrefer 31 est donc maximal au niveau de l'extrémité de libre 26 du pôle magnétique 19.

De plus, le passage du flux magnétique du rotor 4 vers le stator 5 est très important dans la zone du pôle magnétique 19 proche du flasque 18. Ainsi, diminuer l'entrefer 31 dans cette zone de passage de flux, permet globalement d'augmenter très sensiblement le passage de flux du rotor 4 vers le stator 5, pour une vitesse de rotation donnée. Cela est d'autant plus avantageux que la zone de l'extrémité libre 26 de chaque pôle magnétique 19 est la zone la plus sensible à l'effet de centrifugation engendré par la rotation du rotor 4. Ainsi, augmenter l'entrefer 31 dans la zone de l'extrémité libre 26 du pôle magnétique 19, permet globalement d'augmenter très sensiblement la vitesse de rotation du rotor 4 sans augmenter les risques de frottement entre le rotor 4 et le stator 5. Le courant électrique produit, notamment le niveau de débit de courant, ainsi que les performances mécaniques d'une telle machine électrique tournante 1 sont donc largement améliorées. En effet, une telle machine électrique tournante peut alors atteindre des vitesses de rotation du rotor supérieure à 20 000 tours par minute (rpm) et notamment de l'ordre de 23 800 rpm sans détériorer ladite machine.

Pour des applications de machine électrique tournante à des vitesses inférieures à 20 000 rpm, la présente invention peut permettre d'augmenter la longueur du pôle magnétique comprenant une telle surface externe. En effet, l'extrémité libre du pôle magnétique étant plus éloignée du stator, les contraintes sur l'effet de centrifugation dudit pôle magnétique sont réduites. Ainsi, la longueur du pôle magnétique peut être augmentée pour améliorer les performances électromagnétiques du rotor.

De plus, pour les mêmes raisons, l'épaisseur axiale du flasque de la roue polaire peut être réduite et ainsi permettre au rotor d'avoir une plus grande quantité de conducteurs bobinés, pour des applications à des vitesses inférieures à 20 000 rpm.

En outre, la présente invention permet de réaliser un rotor pour une machine électrique tournante de manière simple, fiable, peu coûteuse et efficace tout en améliorant ses performances.

L'invention trouve des applications en particulier dans le domaine des rotors pour alternateur ou alterno-démarreur mais elle pourrait également s'appliquer à tout type de machine électrique tournante comprenant un rotor, notamment un rotor à griffe.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Rotor pour machine électrique tournante, monté rotatif autour d'un axe (X) et comportant une paire de roues polaires (17) présentant, chacune, un flasque (18) et une pluralité de pôles magnétiques (19), chaque pôle magnétique (19) s'étendant axialement à partir du flasque (18) vers une extrémité libre (26) et présentant une surface externe (27), **caractérisé en ce que** la surface externe (27) d'au moins un pôle magnétique (19) d'au moins une roue polaire (17) présente au moins un segment décroissant (29), ledit segment décroissant (29) étant configuré de manière à ce qu'un rayon entre ladite surface externe (27) et l'axe (X) du rotor (4) décroisse, lorsque l'on se déplace, le long dudit segment décroissant (29), vers l'extrémité libre (26) dudit pôle magnétique (19) et **en ce que** le rayon décroît, le long du segment décroissant (29), de manière sensiblement linéaire.

2. Rotor selon la revendication 1, **caractérisé en ce que** le rayon décroît, le long du segment décroissant (29), suivant un angle inférieur ou égal à 20° par rapport à l'axe (X) du rotor (4).

3. Rotor selon la revendication 1 ou 2, **caractérisé en ce que** le segment décroissant (29) présente une longueur, dans une direction axiale, comprise entre 0,2 et 1 fois la longueur de la surface externe (27) du pôle magnétique (19) correspondant.

4. Rotor selon l'une quelconque des revendications 1 à 3, **caractérisé en ce que** le segment décroissant (27) présente deux extrémités dont une de ces extrémités est confondues avec l'extrémité libre (26) du pôle magnétique (19).

5. Rotor selon l'une quelconque des revendications 1 à 4, **caractérisé en ce que** la surface externe (27) présente, en outre, un segment chanfreiné (24) s'étendant à partir d'une extrémité axiale externe (25) du flasque (18).

6. Rotor selon l'une quelconque des revendications 1 à 5, **caractérisé en ce que** la surface externe (27) présente, en outre, au moins un segment constant (30) configuré de manière à ce que le rayon entre ladite surface externe (27) et l'axe (X) du rotor (4) soit constant, le long dudit segment constant (30).

7. Rotor selon la revendication 6, quand prise en dépendance de la revendication 6, **caractérisé en ce que** le segment constant (30) est adjacent au segment chanfreiné (24) et au segment décroissant (29).

8. Rotor selon les revendications 6 ou 7, **caractérisé en ce que** le segment constant (30) s'étend axialement entre une extrémité axiale externe (25) du flasque (18) et le segment décroissant (29).

9. Rotor selon l'une quelconque des revendications 6 à 8, **caractérisé en ce que** le segment constant (30) présente une longueur, dans une direction axiale, comprise entre 0,3 et 0,8 fois la longueur de la surface externe (27) du pôle magnétique (19) correspondant.

10. Rotor selon l'une quelconque des revendications 6 à 9, **caractérisé en ce que** chaque pôle magnétique (19) d'une seule des roues polaires (17) présente une surface externe (27) comprenant, respectivement, au moins un segment décroissant (29).

11. Rotor selon l'une quelconque des revendications 1 à 9, **caractérisé en ce que** chaque pôle magnétique (19) des deux roues polaires (17) présente une surface externe (27) comprenant, respectivement, au moins un segment décroissant (29).

12. Rotor selon l'une quelconque des revendications 1 à 11, **caractérisé en ce que** chaque pôle magnétique (19) est en forme de griffe.

13. Machine électrique tournante **caractérisée en ce qu'**elle comprend un rotor (4) selon l'une quelconque des revendications 1 à 12.

14. Machine électrique tournante selon la revendication 13, formant un alternateur ou un alterno-démarreur.

## Patentansprüche

1. Rotor für eine umlaufende elektrische Maschine, der um eine Achse (X) drehbar montiert ist und ein Paar von Polrädern (17) enthält, die je einen Flansch (18) und eine Vielzahl von magnetischen Polen (19) aufweisen, wobei jeder magnetische Pol (19) sich axial ausgehend vom Flansch (18) zu einem freien Ende (26) erstreckt und eine Außenfläche (27) aufweist, **dadurch gekennzeichnet, dass** die Außenfläche (27) mindestens eines magnetischen Pols (19) mindestens eines Polrads (17) mindestens ein abnehmendes Segment (29) aufweist, wobei das abnehmende Segment (29) so konfiguriert ist, dass ein Radius zwischen der Außenfläche (27) und der Achse (X) des Rotors (4) abnimmt, wenn man sich entlang des abnehmenden Segments (29) zum freien Ende (26) des magnetischen Pols (19) bewegt, und dass der Radius entlang des abnehmenden Segments (29) im Wesentlichen linear abnimmt.

2. Rotor nach Anspruch 1, **dadurch gekennzeichnet, dass** der Radius entlang des abnehmenden Segments (29) gemäß einem Winkel von weniger als oder gleich 20° bezüglich der Achse (X) des Rotors (4) abnimmt.

3. Rotor nach Anspruch 1 oder 2, **dadurch gekennzeichnet, dass** das abnehmende Segment (29) eine Länge in axialer Richtung zwischen dem 0,2- und dem 1-Fachen der Länge der Außenfläche (27) des entsprechende magnetischen Pols (19) aufweist.

4. Rotor nach einem der Ansprüche 1 bis 3, **dadurch gekennzeichnet, dass** das abnehmende Segment (27) zwei Enden aufweist, wobei eines dieser Enden mit dem freien Ende (26) des magnetischen Pols (19) zusammenfällt.

5. Rotor nach einem der Ansprüche 1 bis 4, **dadurch gekennzeichnet, dass** die Außenfläche (27) außerdem ein abgeschrägtes Segment (24) aufweist, das sich ausgehend von einem äußeren axialen Ende (25) des Flanschs (18) erstreckt.

6. Rotor nach einem der Ansprüche 1 bis 5, **dadurch gekennzeichnet, dass** die Außenfläche (27) außerdem mindestens ein konstantes Segment (30) aufweist, das so konfiguriert ist, dass der Radius zwischen der Außenfläche (27) und der Achse (X) des Rotors (4) entlang des konstanten Segments (30) konstant ist.

7. Rotor nach Anspruch 6, wenn er von Anspruch 6 abhängt, **dadurch gekennzeichnet, dass** das konstante Segment (30) dem abgeschrägten Segment (24) und dem abnehmenden Segment (29) benachbart ist.

8. Rotor nach den Ansprüchen 6 oder 7, **dadurch gekennzeichnet, dass** das konstante Segment (30) sich axial zwischen einem äußeren axialen Ende (25) des Flanschs (18) und dem abnehmenden Segment (29) erstreckt.

9. Rotor nach einem der Ansprüche 6 bis 8, **dadurch gekennzeichnet, dass** das konstante Segment (30) eine Länge in axialer Richtung aufweist, die zwischen dem 0,3- und dem 0,8-Fachen der Länge der Außenfläche (27) des entsprechenden magnetischen Pols (19) liegt.

10. Rotor nach einem der Ansprüche 6 bis 9, **dadurch gekennzeichnet, dass** jeder magnetische Pol (19) eines einzigen der Polräder (17) eine Außenfläche (27) aufweist, die je mindestens ein abnehmendes Segment (29) aufweist.

11. Rotor nach einem der Ansprüche 1 bis 9, **dadurch gekennzeichnet, dass** jeder magnetische Pol (19) der zwei Polräder (17) eine Außenfläche (27) aufweist, die je mindestens ein abnehmendes Segment (29) enthält.

12. Rotor nach einem der Ansprüche 1 bis 11, **dadurch gekennzeichnet, dass** jeder magnetische Pol (19) die Form einer Klaue hat.

13. Umlaufende elektrische Maschine, **dadurch gekennzeichnet, dass** sie einen Rotor (4) nach einem der Ansprüche 1 bis 12 enthält.

14. Umlaufende elektrische Maschine nach Anspruch 13, die einen Generator oder einen Starter-Generator bildet.

## Claims

1. Rotor for rotating electric machine, mounted to rotate about an axis (X) and comprising a pair of pole wheels (17), each having a flange (18) and a plurality of magnetic poles (19), each magnetic pole (19) extending axially from the flange (18) to a free end (26) and having an outer surface (27), **characterized in that** the outer surface (27) of at least one magnetic pole (19) of at least one pole wheel (17) has at least one decreasing segment (29), said decreasing segment (29) being configured in such a way that a radius between said outer surface (27) and the axis (X) of the rotor (4) decreases, with displacement, along said decreasing segment (29), towards the free end (26) of said magnetic pole (19) and **in that** the radius decreases, along the decreasing segment (29), substantially linearly.

2. Rotor according to Claim 1, **characterized in that** the radius decreases, along the decreasing segment (29), according to an angle less than or equal to 20° relative to the axis (X) of the rotor (4).

3. Rotor according to Claim 1 or 2, **characterized in that** the decreasing segment (29) has a length, in an axial direction, of between 0.2 and 1 times the length of the outer surface (27) of the corresponding magnetic pole (19).

4. Rotor according to any one of Claims 1 to 3, **characterized in that** the decreasing segment (27) has two ends of which one of these ends coincides with the free end (26) of the magnetic pole (19).

5. Rotor according to any one of Claims 1 to 4, **characterized in that** the outer surface (27) also has a chamfered segment (24) extending from an outer axial end (25) of the flange (18).

6. Rotor according to any one of Claims 1 to 5, **characterized in that** the outer surface (27) also has at least one constant segment (30) configured in such a way that the radius between said outer surface (27) and the axis (X) of the rotor (4) is constant, along said constant segment (30).

7. Rotor according to Claim 6, when taken as dependent on Claim 6, **characterized in that** the constant segment (30) is adjacent to the chamfered segment (24) and to the decreasing segment (29).

8. Rotor according to Claim 6 or 7, **characterized in that** the constant segment (30) extends axially between an outer axial end (25) of the flange (18) and the decreasing segment (29).

9. Rotor according to any one of Claims 6 to 8, **characterized in that** the constant segment (30) has a length, in an axial direction, of between 0.3 and 0.8 times the length of the outer surface (27) of the corresponding magnetic pole (19).

10. Rotor according to any one of Claims 6 to 9, **characterized in that** each magnetic pole (19) of just one of the pole wheels (17) has an outer surface (27) comprising, respectively, at least one decreasing segment (29).

11. Rotor according to any one of Claims 1 to 9, **characterized in that** each magnetic pole (19) of the two pole wheels (17) has an outer surface (27) comprising, respectively, at least one decreasing segment (29).

12. Rotor according to any one of Claims 1 to 11, **characterized in that** each magnetic pole (19) is claw-shaped.

13. Rotating electric machine, **characterized in that** it comprises a rotor (4) according to any one of Claims 1 to 12.

14. Rotating electric machine according to Claim 13, forming an alternator or an alternator-starter.
